(19) Europäisches Patentamt
European Patent Office
Office européen des brevets

(11) **EP 4 025 880 B1**

(12) **EUROPÄISCHE PATENTSCHRIFT**

(45) Veröffentlichungstag und Bekanntmachung des Hinweises auf die Patenterteilung:
**01.10.2025   Patentblatt 2025/40**

(21) Anmeldenummer: **20760816.7**

(22) Anmeldetag: **20.08.2020**

(51) Internationale Patentklassifikation (IPC):
**_G01F 1/58_** [(2006.01)]

(52) Gemeinsame Patentklassifikation (CPC):
**G01F 1/588**

(86) Internationale Anmeldenummer:
**PCT/EP2020/073368**

(87) Internationale Veröffentlichungsnummer:
**WO 2021/043586 (11.03.2021 Gazette 2021/10)**

(54) **MAGNETISCH-INDUKTIVES DURCHFLUSSMESSGERÄT**

MAGNETIC-INDUCTIVE FLOW METER

DÉBITMÈTRE MAGNÉTO-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **02.09.2019   DE 102019123413**

(43) Veröffentlichungstag der Anmeldung:
**13.07.2022   Patentblatt 2022/28**

(73) Patentinhaber: **Endress+Hauser Flowtec AG**
**4153 Reinach (CH)**

(72) Erfinder:
• **GRAF, Oliver**
**4447 Känerkinden (CH)**
• **HESS, Raphael**
**4153 Reinach (CH)**

• **TRIEBENBACHER, Simon**
**4053 Basel (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
WO-A2-2004/031699   CN-U- 206 523 186
CN-Y- 200 979 426   DE-A1- 1 911 556
DE-A1- 102014 113 409   DE-A1- 102015 120 730
GB-A- 990 484   JP-A- 2001 281 028
JP-A- S5 866 017   JP-A- S51 126 865
US-A- 5 263 374   US-A1- 2014 083 199
US-A1- 2016 341 582

**Beschreibung**

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss V ermittelt werden.

Magnetisch-induktive Durchflussmessgeräte finden vielfach Anwendung in der Prozessund Automatisierungstechnik für Fluide ab einer elektrischen Leitfähigkeit von etwa 5μS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Aus der DE 10 2014 113 409 A1 ist ein magnetisch-induktives Durchflussmessgerät bekannt, das Feldrückführungen und Polschuhe aufweist, die an der Außenwandung des Messrohres anliegend befestigt und über zylinderförmige Spulenkerne miteinander verbunden sind. Diese Anordnung ist besonders für magnetisch-induktive Durchflussmessgeräte mit großen Nennweiten geeignet. Feldrückführungen dienen dazu, die Magnetfeldlinien von einem ersten Spulenkern zu einem zweiten Spulenkern zu führen. Nachteilig an dem gelehrten magnetisch-induktiven Durchflussmessgerät ist jedoch, dass der Durchflussmesswert empfindlich gegenüber dem Strömungsprofil des Mediums ist.

Herkömmliche magnetisch-induktive Durchflussmessgeräte sind empfindlich gegenüber dem Strömungsprofil des Mediums. Abhängig vom Rohrsystem und Messgerät können Messfehler von mehreren Prozent auftreten. Üblicherweise wird daher ein Geradrohr, dessen Länge mindestens das Fünf- bis Zehnfache der Nennweite des Messrohres entspricht, an die einlaufseitige Stirnfläche eingebaut. Es sind allerdings Anwendungen bekannt, in welchen dieser Mindestabstand, die sogenannte Einlaufstrecke, nicht eingehalten werden kann. Das ist zum Beispiel dann der Fall, wenn sich ein Rohrsystem auf engstem Raum befindet. Eine Lösung liefert die in der DE 10 2014 113 408 A1 offenbarten Erfindung, bei der eine Verengung des Rohrdurchmessers zur Konditionierung des Durchflusses führt, wodurch der Einfluss des Strömungsprofils minimiert wird, so dass eine 0-DN Einlaufstrecke verwendet werden kann. Dieser Ausgestaltung nachteilig ist aber, dass zwar eine geringere Empfindlichkeit gegenüber rotationsunsymmetrischer Strömungsprofile realisiert werden kann, dafür aber ein Druckverlust in Kauf genommen werden muss. Außerdem beschränkt sich diese Ausgestaltung auf Rohrsysteme mit DN<350.

Die Empfindlichkeit der Durchflussmessung gegenüber einem rotationsunsymmetrischen Strömungsprofil hängt von der Geometrie des Messrohres und der Elektroden ab. Daher müssen die Einflüsse der Rohr- und Elektrodengeometrie für die korrekte Beschreibung der geschwindigkeitsabhängigen Induktionsspannung berücksichtigt werden. Die beiden genannten Einflüsse werden mathematisch durch eine Gewichtsfunktion GF beschrieben. Der Einfluss der Geometrie auf den Durchfluss lässt sich am besten an folgendem Zusammenhang verdeutlichen:

$$U(x) = \int_V v(x') \, GF(x', x) dV$$

wobei für die Bestimmung der Spannung $U(x)$, die Strömungsgeschwindigkeit $v(x')$ und die Gewichtsfunktion $GF(x', x)$ über das Volumen des Messrohres integriert werden. Dabei wird die Gewichtsfunktion $GF$ anhand $GF(x', x) = B \times \nabla G(x', x)$, mit dem Magnetfeld $B(x')$ und einer Greenschen Funktion $G$, die von den elektrischen Randbedingungen gegeben wird, beschrieben. Das Ziel eines Optimierungsverfahrens ist es nun die Geometrie des Aufbaus dahingehend zu optimieren, dass im gesamten Strömungsprofil $\nabla \times GF = 0$ gilt. Dies ist jedoch für ein Rohr mit einem einzelnen punktförmigen Messelektrodenpaar nicht möglich. Einen möglichen Lösungsansatz liefert die Anpassung der Elektrodenform. Dies ist jedoch nicht praktisch und verursacht neue Schwierigkeiten. Ein weiterer Lösungsansatz besteht darin, mehrere Messelektrodenpaaren zu verwenden.

So ist beispielsweise aus der CN 101294832 A ein magnetisch-induktives Durchflussmessgerät bekannt, das zwei Messelektrodenpaare aufweist, die achsensymmetrisch in einem Rohrquerschnitt angeordnet sind, um somit den Einfluss des Strömungsprofils auf die Bestimmung des Volumendurchflusses zu minimieren. Die beiden durch die jeweiligen Messelektrodenpaare definierten Elektrodenachsen spannen dabei in dem Querschnitt des Messrohres einen Winkel von ca. 40° auf.

Die WO2004/031699 A2 offenbart einen induktiven Durchflussmesser für elektrisch leitfähige Flüssigkeiten, bei dem eine verbesserte Unempfindlichkeit gegenüber messwertverfälschenden Einflüssen von Strömungsprofiländerungen und Strömungsprofilunsymmetrien dadurch erreicht wird, dass das von dem Magnetfedlerzeugungssystem angelegte Magnetfeld, welches eine Orientierung quer zur Strömungsrichtung und quer zur Verbindungslinie zwischen den Messelektroden an der Strömungskanalinnenwand hat, eine stark konkave Verteilung der effektiven Intensität des Magnetfeldes zwischen einem mittig zwischen den Messelektroden gelegenen Punkt der die Messelektroden enthaltenden Querschnittsebene und der Strömungskanalinnenfläche über den Innenumfang des Strömungskanals hin bis zu einem Punkt nahe den Messelektroden hat.

Eine weitere Ausführung wird in DE 102015113390 A1 gezeigt, in der ein zweites und drittes Messelektrodenpaar auf definierten Elektrodenachsen angeordnet sind, die um einen Winkelmaß von kleiner gleich ±45° gegenüber einer zum Magnetfeld senkrecht orientierten ersten Elektrodenachse arrangiert sind.

Die EP 0878694 A1 offenbart ebenfalls ein magnetisch-induktives Durchflussmessgerät, das, ausgehend vom Stand der Technik, durch die Verwendung von zwei zusätzlichen Messelektrodenpaaren, deren Elektrodenachsen jeweils einen Winkel von ca. 45° zu der Elektrodenachse des herkömmlichen Messelektrodenpaares zur Messrohrachse aufspannen, eine Verbesserung der Messgenauigkeit im Bereich von Messfehlern unter 1% realisiert. Dies wird insbesondere dadurch erreicht, dass die an den Elektroden anliegenden Potentialdifferenzen einzeln erfasst und gewichtet werden.

Diesen Ausgestaltungen nachteilig ist aber, dass zwar für kleine Durchmesser die Messgenauigkeit optimiert wird, diese aber bei handelsüblichen Messrohren mit großer Nennweite nicht die angestrebte Verringerung der Messfehler erreichen. Außerdem ist nachteilig, dass für jedes Messelektrodenpaar ein Gewichtungsfaktor berücksichtigt werden muss, wobei nicht von vornherein klar ist, wie dieser in Abhängigkeit des Rohrsystems bzw. des rotationsunsymmetrischen Strömungsprofils gewählt werden muss.

Ausgehend von dem dargelegten Stand der Technik liegt der vorliegenden Erfindung die Aufgabe zugrunde, ein magnetisch-induktives Durchflussmessgerät bereitzustellen, welches die Einflüsse eines rotationsunsymmetrischen Strömungsprofils bei der Bestimmung der Durchflussmesswertes minimiert.

Die Aufgabe wird gelöst durch das magnetisch-induktive Durchflussmessgerät nach Anspruch 1.

Das erfindungsgemäße magnetisch-induktive Durchflussmessgerät umfasst:

- ein Messrohr zum Führen eines fließfähigen Mediums in eine Längsrichtung;
- eine Messelektrodenanordnung zum Erfassen einer strömungsgeschwindigkeitsabhängigen, in dem Medium induzierten Messspannung, wobei die Messelektrodenanordnung zwei Messelektrodengruppen aufweist, die gegenüberliegend am Messrohr angebracht sind,

wobei zwei, jeweils eine in einer Querschnittsebene des Messrohres außenliegende Messelektrode einer Messelektrodengruppe schneidende Radien einen Mittelpunktswinkel $\alpha$ aufspannen,

wobei $20° \leq \alpha \leq 40°$ erfüllt ist; und

- eine magnetfelderzeugende Vorrichtung zum Erzeugen eines das Messrohr durchsetzenden Magnetfeldes,

wobei die magnetfelderzeugende Vorrichtung mindestens zwei Spulenkerngruppen mit jeweils mindestens zwei Spulenkernen aufweist, wobei eine Bezugsebene, die durch eine Längsachse des Messrohres und eine Messelektroden der Messelektrodenanordnung schneidende Querachse des Messrohres aufgespannt wird, das Messrohr in einen ersten und einen zweiten Teil einteilt, wobei der erste und der zweite Teil des Messrohres jeweils mindestens eine Spulenkerngruppe aufweist, wobei zwei die in einer Querschnittsebene des Messrohres außenliegenden Spulenkerne einer Spulenkerngruppe schneidende Radien einen Mittelpunktswinkel $\beta$ aufspannen, wobei für den Mittelpunktswinkel $\beta$ gilt, dass $60° \leq \beta \leq 80°$ ist.

Vorteilhafterweise sind mindestens zwei Spulenkerne mit jeweils mindestens einer Spule in den jeweiligen Teilen des Messrohres angeordnet. Gemäß dieser Ausgestaltung ergibt sich daraus eine weitere Optimierungsmöglichkeit für das resultierende Magnetfeld im Messrohr. Optimierungsmöglichkeiten liefern die Position der jeweiligen Spulenkerne, die Anzahl der Spulen, der Durchmesser des Spulenkerns, die Anzahl der Windungen und der Querschnitt der Windungen.

Um ein strömungsprofilunabhängiges magnetisch-induktives Durchflussmessgerät zu realisieren muss die Anordnung der Spulenkerne an die Anzahl der Messelektroden angepasst werden. Die bevorzugten Mittelpunktswinkel beider Fälle schließen sich aus.

In einer weiteren bevorzugten Ausgestaltung besteht das Messrohr aus einem Metall, welches im fluidberührenden Bereich mit einem elektrisch isolierenden Liner ausgekleidet ist. Alternativ kann das Messrohr auch aus einer Keramik oder einem Kunststoff bestehen, wobei die zumindest zwei Polschuhe und/oder die zumindest zwei Rückführungsbleche auf der Mantelaußenfläche des Messrohres angeordnet, oder in das Messrohr eingebettet sind.

Erfindungsgemäß ist vorgesehen, dass alle Messelektroden einer Messelektrodengruppe miteinander elektrisch verbunden, insbesondere kurzgeschlossen sind.

Das Kurzschließen kann durch herkömmliche Kabel oder mittels speziell geformter Kontaktkörper realisiert werden, welche das Verbinden der Messelektroden bei der Herstellung des magnetisch-induktiven Durchflussmessgerätes vereinfacht.

Der technische Erfolg dieser Ausgestaltung der Erfindung besteht darin, dass gefunden wurde, dass durch das Anpassen der Winkel $\alpha$ und $\beta$ auf eine Abtastung der einzelnen Potentialdifferenzen mit Hinzunahme von empirisch bestimmte Gewichtungsfaktoren verzichtet werden kann und die anliegende Spannung über alle Elektroden im Falle einer Störung weniger als 0,5% von einem anhand eines voll ausgebildeten Strömungsprofils ermittelten Messwertes abweicht. Eine Gewichtung der einzelnen Spannungswerte ist somit nicht notwendig, wodurch die Auswerteeinheit zur Bestimmung der anliegenden Spannung und der daraus resultierenden Strömungsgeschwindigkeit deutlich vereinfacht werden kann. Es reicht nunmehr den gemessenen Spannungswert mittels einer Kalibration in eine Strömungsgeschwindigkeit oder einen Volumendurchfluss umzuwandeln.

Die Elektroden sind mit einer Messschaltung verbunden, die anhand der in den Elektroden induzierten Spannung Informationen über den Durchflussmesswert des Mediums im Messrohr liefert. Der Durchflussmesswert umfasst die Strömungsgeschwindigkeit, den Volumendurchfluss und den Massedurchfluss des fließenden Mediums.

Erfindungsgemäß ist vorgesehen, dass zwei, jeweils eine in einer Querschnittsebene des Messrohres außenliegende Messelektrode einer Messelektrodengruppe schneidende Radien einen Mittelpunktswinkel $\alpha$ aufspannen,

wobei 20° ≤ $\alpha$ ≤ 40° erfüllt ist.

Vorteilhafterweise umfasst das Messrohr mindestens zwei Messelektroden an Stelle von großflächigen Messelektroden, um die im Medium vorliegende Potentialverteilung an mehreren Positionen zu messen bzw. um eine Mittelung über die Potentialverteilung im Medium über eine größeren Bereich zu erlangen. Die beanspruchte Anordnung hat sich als besonders vorteilhaft herausgestellt, da die an den Messelektroden anliegende Messspannung besonders unempfindlich gegenüber Asymmetrien im Strömungsprofil ist.

Diese Anordnung korelliert jedoch mit der Anordnung der Spulenkerne. Erst durch die Kombination der beiden Merkmale ergibt sich die Unempfindlichkeit bezüglich Asymmetrien im Strömungsprofil.

Die Radien welche durch die außenliegenden Messelektroden verlaufen spannen einen Kreisausschnitt auf, in dem alle Messelektroden einer Messelektrodengruppe angeordnet sind.

Erfindungsgemäß ist vorgesehen, dass eine Spulenkerngruppe mindestens vier Spulenkerne aufweist, die in einer Querschnittsebene des Messrohres angebracht sind, wobei die jeweils die innenliegenden Spulenkerne einer Spulenkerngruppe schneidende Radien einen Mittelpunktswinkel $\gamma$ aufspannen, für den 1° ≤ $\gamma$ ≤ 80° gilt.

Es ist besonders vorteilhaft, wenn die Spulenkerngruppen zusätzlich zu den außenliegenden zwei Spulenkernen, mindestens zwei weitere Spulenkerne aufweisen, die zwischen den beiden außenliegenden Spulenkernen angeordnet sind. Dadurch kann die magnetische Flussdichte im Messrohr erhöht werden. Zusätzlich ergibt sich daraus eine weitere Optimierungsmöglichkeit das Magnetfeld im Inneren des Messrohres zu kontrollieren.

Als vorteilhaft hat sich die oben beanspruchte Anordnung der innenliegenden Spulenkerne einer Spulenkerngruppe in Kombination mit den für die Messelektroden und den außenliegenden Spulenkernen beanspruchten Anordnung herausgestellt, dass zusätzlich zu der zunehmenden Kompaktheit der an der Außenwandung des Messrohres angebrachten Bauteile eine Reduzierung der Empfindlichkeit gegenüber Asymmetrien im Strömungsprofil erreicht wird.

Vorzugsweise weisen die Spulenkerne jeweils einen Schlitz auf, durch den ein Spannband geführt ist, mit dem die Spulenkerne an dem Messrohr fixiert werden. Die beanspruchte Anordnung ist weiterhin vorteilhaft bezüglich der Befestigung der Spulenkerne und der Feldrückführungsanordnung, da besonders bei der beanspruchten Anordnung der inneren Spulenkerne das Spannband beim Fixieren nicht nur die Spulenkerne an die Außenwandung des Messrohres bzw. an Teile des Polschuhs und der Feldrückführung, sondern auch die Enden der Feldrückführungen anpresst. Dies führt zu einer Minimierung des Überschwingens bzw. zu einer besseren Kontrollen über das Überschwingverhalten des Magnetfeldes bei Richtungswechseln.

Erfindungsgemäß ist vorgesehen, dass ein Spulenkern durch mindestens zwei und bevorzugt genau zwei Spulen verläuft,

wobei eine Längsachse der Spulenkerns parallel zur Längsachse des Messrohres verläuft.

Um die magnetische Flussdichte im Messrohr zu erhöhen muss die Anzahl der Windungen oder der Spulenstrom erhöht werden. Es hat sich als vorteilhaft herausgestellt, den Durchmesser der Windungen zu erhöhen und zusätzliche Spulen am Messrohr anzuordnen. Dadurch kann eine kompakte Bauweise für das magnetisch-induktive Durchflussmessgerät gewährleistet und magnetisch-induktive Durchflussmessgerät mit insbesondere großen Nennweiten aus vielen Gleichbauteilen bzw. gleichen Bauteilen realisiert werden.

Erfindungsgemäß ist vorgesehen, dass die zwei Teile des Messrohres jeweils genau zwei Spulenkerngruppen aufweisen,

wobei eine erste Spulenkerngruppe und eine zweite Spulenkerngruppe im ersten Teil des Messrohres angeordnet sind,

wobei die erste Spulenkerngruppe in einer ersten Querschnittsebene und eine zweite Spulenkerngruppe in einer zweiten Querschnittsebene angeordnet sind,

wobei die erste und die zweite Querschnittsebene in Längsrichtung beabstandet sind.

Dadurch wird ein symmetrische Verteilung des Magnetfeldes im Messrohr realisiert.

Erfindungsgemäß ist vorgesehen, dass die Messelektrodenanordung in einer dritten Querschnittsebene angeordnet ist, wobei die dritte Querschnittsebene zwischen der ersten und der zweiten Querschnittsebene angeordnet ist und bevorzugt eine Symmetrieebene der Spulenkerngruppen und bevorzugt der magnetfelderzeugenden Vorrichtung bildet.

Dadurch wird ein symmetrische Verteilung des Magnetfeldes im Messrohr realisiert, wodurch das Messrohr in beiden Längsrichtung betrieben werden kann. Diese Anordnung ist besonders für Messrohre mit Nennweiten ≥ DN1000 geeignet.

Es ist von Vorteil, wenn jede der zumindest vier Spulen die gleiche Geometrie, insbesondere eine nichtsattelförmige ebene Geometrie aufweist. Die Verwendung ebener Spulen reduziert vorteilhaft in Bezug auf die Kosten den Bedarf an Kupfer.

Ferner ist es von Vorteil, wenn jede der zumindest vier Spulen von gleicher Bauart ist. Dies vereinfacht die Konstruktion und die Montage.

Eine Ausgestaltung sieht vor, dass alle Spulen in Reihe geschaltet einen elektrischen Widerstand aufweisen, der zwischen 2 und 300 $\Omega$, insbesondere zwischen 100 und 280 $\Omega$ und bevorzugt zwischen 150 und 260 $\Omega$ liegt.

Eine Ausgestaltung sieht vor, dass die magnetfelderzeugende Vorrichtung zwei Polschuhe aufweist,

wobei die Polschuhe gegenüberliegend, an einer Außenwandung des Messrohres insbesondere anliegend angebracht sind,

wobei die Polschuhe jeweils durch mindestens zwei und bevorzugt genau zwei oder genau vier Polschuhkörpern gebildet sind,

wobei die Polschuhkörper aus gestapelten Blechteilen, insbesondere Elektroblechen gebildet sind.

Dadurch lässt sich eine vereinfachte Montage der Polschuhe an die Außenwandung des Messrohres realisieren.

Eine Ausgestaltung sieht vor, dass zwei benachbarte Polschuhkörper einen Mindestabstand C in Längsrichtung des Messrohres aufweisen, der kleiner als 500 Millimeter, insbesondere kleiner als 50 Millimeter und bevorzugt zwischen 2 und 5 Millimeter liegt.

Durch die Beabstandung zweier Polschuhkörper wird eine Führung gebildet zum Führen der Verkabelung der Messelektroden. Die beanspruchte Polschuhanordnung gewährleistet jedoch, dass die Magnetfeldlinien im Messbereich im Wesentlichen senkrecht zur Elektrodenachse und zur Längsachse des Messrohres verlaufen.

Eine Ausgestaltung sieht vor, dass mindestens eine Feldrückführungsanordnung an der Außenwandung des Messrohres insbesondere anliegend angebracht ist,

wobei die Feldrückführungsanordnung mindestens zwei Feldrückführungen umfasst,

wobei die Spulenkerne die Polschuhe mit den Feldrückführungen verbinden.

In einer bevorzugten Ausgestaltung weisen die Feldrückführungen und Polschuhe die Form rechteckiger gekrümmter Bleche auf, wobei die Krümmung an das Messrohr angepasst ist. Die Feldrückführung und die Polschuhe sind an der Außenwand des Messrohres anliegend angebracht. Dabei ist es von Vorteil, wenn die Polschuhe zweiteilig ausgebildet sind, da dadurch besonders bei Messrohren mit großen Nennweiten (≥ DN 1000) eine einfache Montage ermöglicht wird. Gleiches gilt auch für die Feldrückführungen.

Die direkte Anordnung der Spulen, Polschuhe und Feldrückführungen am Messrohr reduziert den Materialbedarf für diese Komponenten deutlich. Ferner ist die Befestigung am Messrohr besonders einfach und gleichzeitig besonders stabil. Trotz der Reduzierung der Herstellungskosten kann eine hohe Messgenauigkeit erreicht werden, da störende Streufelder minimiert werden können. Eine direkte Anordnung bedeutet, dass die Komponenten unmittelbar am Messrohr angeordnet sind. Beispielsweise können sie direkt auf das Messrohr geklebt werden.

Eine Feldrückführungsanordnung ist üblicherweise dazu vorgesehen Magnetfeldlinien, die aus dem Spulenkern austreten und dabei das Messrohr nicht oder nur teilweise schneiden, einzufangen und von einem Spulenkern zu einem anderen Spulenkern zu leiten. Deshalb verbinden die Feldrückführungen üblicherweise die dem Polschuh abgewandte Seite der Spulenkerne oder die jeweiligen Enden der Spulenkerne, welche den Polschuh nicht berühren untereinander.

Die Winkel $\alpha, \beta$ und insbesondere $\gamma$ sind so aufeinander abgestimmt, dass das Durchflussmessgerät in dem Maße unempfindlich gegenüber Abweichungen einer rotationssymmetrischen Strömung ist, dass das magnetisch-induktive Durchflussmessgerät bei einer Testmessung einen Messfehler der Durchflussgeschwindigkeit $\Delta_u = \left| \frac{u_{va} - u_S}{u_{va}} \right|$ und/oder einen Messfehler des Volumendurchflusses $\Delta_{\dot{V}} = \left| \frac{\dot{V}_{va} - \dot{V}_S}{\dot{V}_{va}} \right|$ kleiner 1,0%, insbesondere kleiner 0,5% und bevorzugt kleiner 0,2% aufweist, wobei eine Durchflussgeschwindigkeit $u_{va}$ und/oder ein Volumendurchfluss $\dot{V}_{Va}$ im Falle einer Strömung mit voll ausgebildeten Strömungsprofil bestimmt werden, wobei eine Durchflussgeschwindigkeit $u_S$ und/oder ein Volumendurchfluss $\dot{V}_S$ im Falle einer rotationsunsymmetrischen Strömung bestimmt werden.

Nach Störungen treten, abhängig vom Abstand und Art der Störung, durch ein nichtideales Strömungsprofil Messfehler auf, da ein magnetisch-induktives Durchflussmessgerät normalerweise davon ausgeht und dahingehend optimiert worden ist, dass ein voll ausgebildetes rotationssymmetrisches Strömungsprofil vorliegt. Als voll ausgebildetes rotationssymmetrisches Strömungsprofil ist dabei das Strömungsprofil zu verstehen, dass sich in Strömungsrichtung nicht mehr ändert. Ein derartiges Strömungsprofil bildet sich beispielsweise in einem Messrohr mit einer Einlaufstrecke, entsprechend der 30-fachen Messrohr-Nennweite, und einer Mediumsgeschwindigkeit von 2 m/s aus.

Die Testmessung kann auch zur Abstimmung der optimalen Winkel $\alpha$ und $\beta$ dienen und wird dann im Voraus durchgeführt, so dass unter Berücksichtigung des Winkelpaares ($\alpha$ - $\beta$) ein strömungsprofilunabhängiges magnetisch-induktives Durchflussmessgerät realisiert wird.

Die Testmessung kann viele verschiedene Störquellen beinhalten, die alle einen beliebigen Einbauwinkel annehmen können. Durch die Verwendung von ausreichend unterschiedlichen Störungen kann der Winkel $\alpha$ und $\beta$ dahingehend optimiert werden, dass der Messfehler einer speziellen Störung einen Wert kleiner 0,05% und der maximale Messfehler einer beliebigen Störung einen Wert kleiner 0,5% annimmt.

Es hat sich herausgestellt, dass durch die Verwendung von zwei ausreichend unterschiedlichen Störquellen, insbesondere einer Blende und eines 90°Rohrbogens, ein bereits ausreichend gutes Winkelpaar ($\alpha$ - $\beta$) für ein magnetisch-induktives Durchflussmessgerät ermittelt wird, das für eine beliebig andersartige Störung einen maximalen Messfehler von 0,5% aufweist. Durch Einbeziehen weiterer Störquellen in die Testmessung ändern sich die optimierten Parameter nur marginal, wodurch sich der resultierende Messfehler nur geringfügig ändert.

Gemäß einer Ausgestaltung umfasst die Störquelle eine Blende oder einen 90°Rohrbogen, wobei durch die Blende 10% des Querschnitts des Messrohres abgedeckt wird, wobei die Blende eine Kreissehe aufweist, welche die Blende zum Rohr hin begrenzt, wobei die Blende eine erste Blendenorientierung oder eine zweite Blendenorientierung annimmt, wobei bei der ersten Blendenorientierung die Kreissehne senkrecht zum Magnetfeld orientiert ist und bei der zweiten Blendenorientierung die Kreissehne parallel zum Magnetfeld orientiert ist, wobei der 90°Rohrbogen eine erste Rohrbogenorientierung oder eine zweite Rohrbogenorientierung annimmt, wobei sich die erste Rohrbogenorientierung durch eine senkrecht zum Magnetfeld und zur Längsrichtung des Messrohres verlaufende Rohrachse auszeichnet und die zweite Rohrbogenorientierung durch eine parallel zum Magnetfeld und senkrecht zur Längsrichtung des Messrohres verlaufende Rohrachse auszeichnet.

Bislang wird dem Nutzer von magnetisch-induktiven Durchflussmessgeräten eine vorgeschriebene Einlaufstrecke vorgegeben. Diese vorgeschriebene Einlaufstrecke ist notwendig, um den für das Gerät spezifizierten Messfehler einzuhalten. Die auftretenden Messfehler müssen einmalig pro Störungstyp, Abstand, Montagewinkel und evtl. Reynoldszahl ermittelt werden. Dies geschieht entweder durch aufwendige Messreihen oder durch Simulationen der Strömungsverhältnisse bei unterschiedlichen Störungen und Auswertung der berechneten Strömungsprofile. Als Ergebnis dieses Schrittes erhält man Daten, die angeben, wie groß der Messfehler ist, der entstehen würde, wenn ein magnetisch-induktives Durchflussmessgerät in die entsprechende Position eingebaut werden würde und wie groß der Messfehler ist, wenn der Aufbau um weitere Messelektroden ergänzt oder die magnetfelderzeugende Vorrichtung angepasst wird.

Gemäß einer weiteren Ausgestaltung ist die Störung mit Abstand 0-DN zur einlaufseitigen Stirnfläche eingerichtet.

Gemäß einer Weiterbildung ist eine Unempfindlichkeit gegenüber einem rotationsunsymmetrischen Strömungsprofil bei einer Reynoldszahl des Mediums im Messrohr größer gleich 10 000, insbesondere größer gleich 50 000 und bevorzugt größer gleich 100 000 gegeben.

Gemäß einer weiteren Ausgestaltung weist eine Messelektrodengruppe genau drei Messelektroden auf.

Die Messelektrodengruppen müssen dabei nicht notwendigerweise diametral angeordnet sein. Die Messelektroden sind mit dem Messmedium galvanisch oder kapazitiv gekoppelt. Die Erfindung wird anhand der nachfolgenden Figuren näher erläutert. Es zeigt:

Fig. 1: ein nicht erfindungsgemäßes Beispiel eines magnetisch-induktiven Durchflussmessgerätes; und

Fig. 2: eine Parallelprojektion der ersten und dritten Querschnittsebene A, B durch eine zweite Ausgestaltung des magnetisch-induktiven Durchflussmessgerätes.

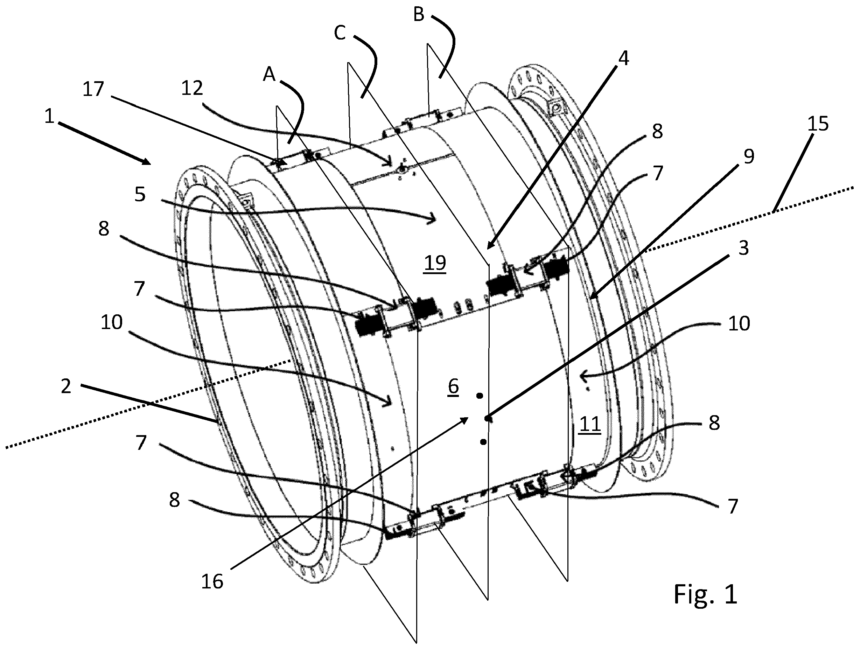

Der Aufbau und das Messprinzip eines magnetisch-induktiven Durchflussmessgerätes sind grundsätzlich bekannt. Die Fig. 1 zeigt ein nicht erfindungsgemäßes Beispiel eines magnetisch-induktiven Durchflussmessgerätes. Durch ein Messrohr 1 wird ein Medium geleitet, das eine elektrische Leitfähigkeit aufweist. Eine magnetfelderzeugende Vorrichtung 4 ist so an dem Messrohr angeordnet, dass sich die Magnetfeldlinien im Wesentlichen senkrecht zu einer durch die Messrohrachse definierten Längsrichtung orientieren. Als magnetfelderzeugende Vorrichtung 4 eignet sich vorzugsweise eine Sattelspule oder ein Polschuh 5 mit aufgesetzten Spulenkern 7 und Spule 8. Die Fig. 1 bildet zwei Polschuhe 5 ab, die jeweils zweiteilig ausgestaltet sind.

Des Weiteren weist das magnetisch-induktive Durchflussmessgerät eine Feldrückführungsanordnung 9 auf, bestehend aus vier Feldrückführungsteilen 10, wobei nur zwei Feldrückführungsteilen 10 abgebildet sind. Diese sind anliegend auf der Außenwandung 6 des Messrohres 1 angebracht. In der Fig. 1 sind nur sechs von acht zylinderförmige Spulenkerne 7 und Spulen 8 abgebildet. Die Längsachse der Spulenkerne 7 verläuft im Wesentlichen parallel zur Längsachse 15 des Messrohres. Die Spulenkerne 7 verbinden den Polschuh 5 mit den Feldrückführungskörpern 10. Zwischen den Feldrückführungskörpern 10 und einem der Polschuhe 5 ist eine Spule 8 angeordnet. Erfindungsgemäß können aber auch mehr Spulen angeordnet werden. Jedes Feldrückführungsteil 10 umfasst einen Feldrückführungskörper 11, der aus mehreren stanzpaketierten Elektroblechteilen gebildet wird. Dabei ist die Dicke des Polschuhkörpers 19 und die Dicke des Feldrückführungsteils 10 im Wesentlichen gleich groß. Die Polschuhkörper 19 sind vorzugsweise aus stanzpaketierten Elektroblechteilen gebildet. Die Feldrückführungsteile 10 verbinden jeweils mindestens zwei unterschiedliche Spulenkerne 7 miteinander, wodurch eine magnetische Kopplung realisiert wird. Die einzelnen Komponente des Magnetsystems sind mittels Schrauben am Messrohrkörper befestigt. Bei angelegtem Magnetfeld entsteht im Messrohr 1 eine durchflussabhängige Potentialverteilung, die mit zwei an der Innenwand des Messrohres 1 gegenüberliegend, angebrachten Messelektrodengruppen 16 abgegriffen wird. In der Regel sind diese diametral angeordnet und bilden eine Elektrodenachse bzw. werden durch eine Querachse geschnitten, die senkrecht zu den Magnetfeldlinien und der Längsachse des Messrohres verläuft. Die Messelektroden 3 liegen alle in einem dritten Querschnitt C. In der Ausgestaltung weist eine Messelektrodengruppe 16 genau drei Messelektroden 3 auf. Anhand der abgegriffenen Messspannung U kann, unter Berücksichtigung der magnetischen Flussdichte, die Durchflussgeschwindigkeit u und, unter zusätzlicher Berücksichtigung der Rohrquerschnittsfläche, der Volumendurchfluss V des Mediums bestimmt werden. Ist die Mediumsdichte zusätzlich bekannt, kann auch der Massedurchfluss ṁ überwacht werden. Um das Ableiten der an Messelektrodengruppen 16 anliegenden Messspannung über das Messrohr 1 zu verhindern, wird die Innenwand mit einem isolierenden Material, beispielsweise einem Kunststoff-Liner ausgekleidet. Eine Messschaltung ist dazu eingerichtet die an den Messelektrodengruppen 16 anliegende Messspannung zu detektieren. Dabei sind die jeweiligen Messelektroden 3 einer Messelektrodengruppe 16 elektrisch miteinander verbunden. Eine Auswerteschaltung ist dazu ausgebildet die Durchflussmesswerte des Mediums aus der detektierten Messspannung zu ermitteln. Die magnetfelderzeugende Vorrichtung 4 wird über eine Betriebsschaltung angesteuert. Handelsübliche magnetisch-induktive Durchflussmessgeräte weisen zusätzlich zu den Messelektroden 3 zwei weitere Elektroden auf. Zum einen dient eine, optimalerweise am höchsten Punkt im Messrohr 1 angebrachte Füllstandsüberwachungselektrode 12 dazu, eine Teilbefüllung des Messrohres 1 zu detektieren, und ist dazu eingerichtet diese Information an den Nutzer weiterzuleiten und/oder den Füllstand bei der Ermittlung des Volumendurchflusses zu berücksichtigen. Des Weiteren dient eine Erdungselektrode dazu eine ausreichende Erdung des Mediums zu gewährleisten. An den Enden des Messrohres sind metallische Prozessanschlüsse 2 angebracht. In dem Fall handelt es sich um Flansche, die zum Einbinden des Messrohres in eine Rohrleitung ausgebildet sind. Des Weiteren sind zwei Kragen am Messrohr zwischen Feldrückführungsanordnung und Prozessanschluss 2 angebracht, die seitliche Außenwände eines Gehäuses bilden. Eine erste Spulenkerngruppe 17.1 weist Spulenkerne 7 auf, die in einer ersten Querschnittsebene A angeordnet sind. Eine zweite Spulenkerngruppe 17.2 weist Spulenkerne 7 auf, die in einer zweiten Querschnittsebene B angeordnet sind. Die Positionen der Spulenkerne 7 der einzelnen Spulenkerngruppen 17 erfüllt die beanspruchten Anforderungen, nämlich dass $60° \leq \beta \leq 80°$ ist. Die Positionen der einzelnen Messelektroden 3 erfüllen die beanspruchten Anforderungen, nämlich dass $20° \leq \alpha \leq 40°$ gilt.

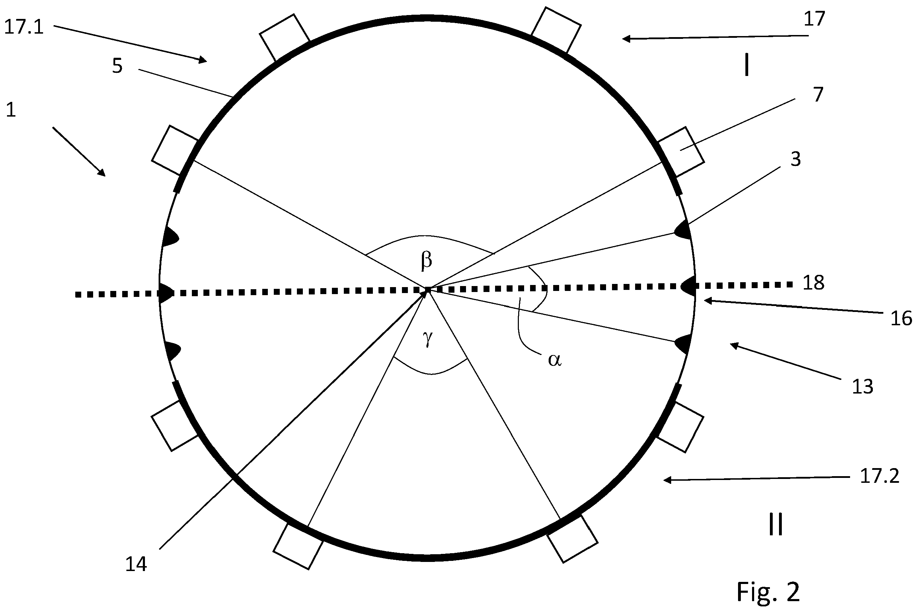

Die Fig. 2 zeigt einen Parallelprojektionsdarstellung einer zweiten Ausgestaltung des erfindungsgemäßen magnetisch-induktiven Durchflussmessgerätes zur Darstellung der Anordnung der Spulenkerne 7 und der Messelektroden 3. Das Messrohr 1 ist mittels einer Bezugsebene in zweite Teile I, II eingeteilt. Im ersten Teil I ist eine erste Spulenkerngruppe 17.1 und im zweiten Teil II ist eine zweite Spulenkerngruppe 17.2 angeordnet. Im Vergleich zur ersten Ausgestaltung umfasst jede Spulenkerngruppe 17 zwei weitere Spulenkerne 7, die zwischen den außenliegenden Spulenkernen 7 angeordnet sind und deren Position durch den Mittelpunktswinkel $\gamma$ beschrieben wird. In dem Querschnitt sind zwei gegenüberliegende und an der Außenwandung des Messrohres 1 angebrachte Polschuhe 5 abgebildet. Die Form beider Polschuhe 5 lässt sich ansatzweise durch einen Kreisbogen beschreiben. Auf einem Polschuh 5 sind gemäß dieser Ausgestaltung vier Spulenkerne 7 angeordnet, welche jeweils mindestens eine Spule (nicht abgebildet) aufweisen und die Feldrückführungen mit den Polschuhen 5 verbinden. Die außenliegenden Spulenkerne 7, insbesondere ein auf der Längsachse des jeweiligen Spulenkerns 7 liegender Punkt, und der Mittelpunkt 14 des Messrohres 1 im Querschnitt bilden Kreisbogen mit einem Mittelpunktswinkel β. Für den Mittelpunktswinkel $\beta$ gilt, dass $60° \leq \beta \leq 80°$ ist. Die abgebildete Ausgestaltung weist einen Mittelpunktswinkel $\beta$ von ca. 110° auf. Die außenliegenden Messelektroden 3 der Messelektrodengruppe 16 und der Mittelpunkt 14 bilden einen Kreisausschnitt mit einem Mittelpunktswinkel $\alpha$. Für den Mittelpunktswinkel $\alpha$ gilt, dass $10° \leq \alpha \leq 60°$, insbesondere $15° \leq \alpha \leq 50°$ und bevorzugt $20° \leq \alpha \leq 40°$ erfüllt ist. In der abgebildeten Ausgestaltung liegt der Mittelpunktswinkel $\alpha$ bei ca. 30°. Die Anordnung der innenliegend angebrachten Spulenkerne lässt sich durch einen Mittelpunktswinkel $\gamma$ charakterisieren. Für diesen gilt, dass $1° \leq \gamma \leq 80°$, insbesondere $2° \leq \gamma \leq 50°$ und bevorzugt $10° \leq \gamma \leq 40°$ ist.

**Bezugszeichenliste**

| | |
|---|---|
| 1 | Messrohr |
| 2 | metallischer Prozessanschluss/Flansch |
| 3 | Messelektrode |
| 4 | magnetfelderzeugende Vorrichtung |
| 5 | Polschuh |
| 6 | Außenwandung |
| 7 | Spulenkern |
| 8 | Spule |
| 9 | Feldrückführungsanordnung |
| 10 | Feldrückführung |
| 11 | Feldrückführungskörper |
| 12 | Füllstandsüberwachungselektrode |
| 13 | Messelektrodenanordnung |
| 14 | Mittelpunkt |
| 15 | Längsachse des Messrohres |
| 16 | Messelektrodengruppen |
| 17 | Spulenkerngruppe |
| 17.1 | erste Spulenkerngruppe |
| 17.2 | zweite Spulenkerngruppe |
| 18 | Bezugsebene |
| 19 | Polschuhkörper |
| I | erster Teil |
| II | zweiter Teil |
| A | erste Querschnittsebene |
| B | zweite Querschnittsebene |
| C | dritte Querschnittsebene |

**Patentansprüche**

1. **Magnetisch-induktives** Durchflussmessgerät, umfassend:

   - ein Messrohr (1) zum Führen eines fließfähigen Mediums in eine Längsrichtung;
   - eine Messelektrodenanordnung (13) zum Erfassen einer strömungsgeschwindigkeitsabhängigen, in dem Medium induzierten Messspannung,

      wobei die Messelektrodenanordnung (13) zwei Messelektrodengruppen (16) aufweist, die gegenüberliegend am Messrohr (1) angebracht sind,

      wobei die Messelektrodengruppen (16) jeweils mindestens zwei Messelektroden (3) umfassen,

      wobei zwei, jeweils eine in einer Querschnittsebene des Messrohres (1) außenliegende Messelektrode (3) einer Messelektrodengruppe (16) schneidende Radien einen Mittelpunktswinkel $\alpha$ aufspannen, sodass $20° \leq \alpha \leq 40°$ erfüllt ist,

      wobei alle Messelektroden (3) einer Messelektrodengruppe (13) miteinander elektrisch verbunden sind; und

   - eine magnetfelderzeugende Vorrichtung (4) zum Erzeugen eines das Messrohr (1) durchsetzenden Magnetfeldes,

      wobei die magnetfelderzeugende Vorrichtung (4) mindestens zwei Spulenkerngruppen (17) mit jeweils mindestens zwei Spulenkernen (7) aufweist,

      wobei eine Bezugsebene (18), die durch eine Längsachse (15) des Messrohres (1) und eine Messelektroden (3) der Messelektrodenanordnung (16) schneidende Querachse des Messrohres (1) aufgespannt wird, das Messrohr (1) in einen ersten und einen zweiten Teil (I, II) einteilt,

      wobei der erste und der zweite Teil (I, II) des Messrohres (1) jeweils mindestens eine Spulenkerngruppe (17) aufweist,

      wobei zwei die in einer Querschnittsebene des Messrohres (1) außenliegenden Spulenkerne (7) einer Spulenkerngruppe (17) schneidende Radien einen Mittelpunktswinkel $\beta$ aufspannen,

      wobei für den Mittelpunktswinkel $\beta$ gilt, dass $60° \leq \beta \leq 80°$ ist,

      **dadurch gekennzeichnet,**

      **dass** eine Spulenkerngruppe (17) mindestens vier Spulenkerne (7) aufweist, die in einer Querschnittsebene des Messrohres (1) angebracht sind,

      wobei die jeweils die innenliegenden Spulenkerne (7) einer Spulenkerngruppe (17) schneidende Radien einen Mittelpunktswinkel $\gamma$ aufspannen, für den $1° \leq \gamma \leq 80°$ gilt,

      wobei ein Spulenkern (7) durch mindestens zwei Spulen (8) verläuft,

      wobei eine Längsachse der Spulenkerns parallel zur Längsachse (15) des Messrohres (1) verläuft,

      wobei die zwei Teile (I, II) des Messrohres (1) jeweils genau zwei Spulenkerngruppen (17) aufweisen,

      wobei eine erste Spulenkerngruppe (17.1) und eine zweite Spulenkerngruppe (17.2) im ersten Teil (I) des Messrohres (1) angeordnet sind,
wobei die erste Spulenkerngruppe (17.1) in einer ersten Querschnittsebene (A) und eine zweite Spulenkerngruppe (17.2) in einer zweiten Querschnittsebene (B) angeordnet sind,
wobei die erste und die zweite Querschnittsebene (A, B) in Längsrichtung des Messrohres (1) beabstandet sind, wobei die Messelektrodenanordung (13) in einer dritten Querschnittsebene (C) angeordnet ist, wobei die dritte Querschnittsebene (C) zwischen der ersten und der zweiten Querschnittsebene (A, B) angeordnet ist und bevorzugt eine Symmetrieebene der Spulenkerngruppen (17) und bevorzugt der magnetfelderzeugenden Vorrichtung (4) bildet.

2. Durchflussmessgerät nach einem der Ansprüche 1,

wobei die Spulenkerngruppe (17) genau vier Spulenkerne (7) aufweist, die in der Querschnittsebene des Messrohres (1) angebracht sind,
wobei für den Mittelpunktswinkel $\gamma$ $2° \leq \gamma \leq 50°$ und bevorzugt $10° \leq \gamma \leq 40°$ gilt.

3. Durchflussmessgerät nach einem der vorherigen Ansprüche,
wobei ein Spulenkern (7) durch genau zwei Spulen (8) verläuft.

4. Durchflussmessgerät nach einem der vorhergehenden Ansprüche,
wobei alle Spulen (8) in Reihe geschaltet einen elektrischen Widerstand aufweisen, der zwischen 2 und 300 $\Omega$, insbesondere zwischen 100 und 280 $\Omega$ und bevorzugt zwischen 150 und 260 $\Omega$ liegt.

5. Durchflussmessgerät nach einem der vorherigen Ansprüche,

wobei die magnetfelderzeugende Vorrichtung (4) zwei Polschuhe (5) aufweist,
wobei die Polschuhe (5) gegenüberliegend, an einer Außenwandung des Messrohres (1) insbesondere anliegend angebracht sind,
wobei die Polschuhe (5) jeweils durch mindestens zwei und bevorzugt genau zwei oder genau vier Polschuhkörpern (19) gebildet sind,
wobei die Polschuhkörper (19) aus gestapelten Blechteilen, insbesondere Elektroblechen gebildet sind.

6. Durchflussmessgerät nach Anspruch 5,
wobei zwei benachbarte Polschuhkörper (19) einen Mindestabstand C in Längsrichtung des Messrohres (1) aufweisen, der kleiner als 500 Millimeter, insbesondere kleiner als 50 Millimeter und bevorzugt zwischen 2 und 5 Millimeter liegt.

7. Durchflussmessgerät nach einem der vorherigen Ansprüche,

wobei mindestens eine Feldrückführungsanordnung (9) an der Außenwandung des Messrohres (1) insbesondere anliegend angebracht ist,
wobei die Feldrückführungsanordnung (9) mindestens zwei Feldrückführungen (10) umfasst,

wobei die Spulenkerne (7) die Polschuhe (5) mit den Feldrückführungen (10) verbinden.

## Claims

1. A magneto-inductive flowmeter, comprising:

- A measuring tube (1) for conducting a flowable medium in a longitudinal direction;
- a measuring electrode arrangement (13) for detecting a measuring voltage induced in the medium dependent on the flow velocity,

wherein the measuring electrode arrangement (13) has two measuring electrode groups (16) which are attached opposite each other on the measuring tube (1),
wherein each measuring electrode group (16) has at least two measuring electrodes (3),
wherein two radii, each intersecting an external measuring electrode (3) of a measuring electrode group (16) in a cross-sectional plane of the measuring tube (1), form a central angle $\alpha$ such that $20° \leq \alpha \leq 40°$,
wherein all measuring electrodes (3) of a measuring electrode group (13) are electrically connected to each other; and

- a magnetic-field-generating device (4) for generating a magnetic field which passes through the measuring tube (1),

wherein the magnetic-field-generating device (4) has at least two coil core groups (17) each with at least two coil cores (7),
wherein a reference plane (18), which is formed by a longitudinal axis (15) of the measuring tube (1) and a lateral axis of the measuring tube (1) intersecting measuring electrodes (3) of the measuring electrode arrangement (16), divides the measuring tube (1) into a first part and a second part (I, II),
wherein both the first and the second parts (I, II) of the measuring tube (1) have at least one coil core group (17),
wherein two radii intersecting the external coil cores (7) of a coil core group (17) in a cross-sectional plane of the measuring tube (1) form a central angle $\beta$,
wherein for the central angle $\beta$, $60° \leq \beta \leq 80°$, **characterized in that**
a coil core group (17) has at least four coil cores (7) which are attached in a cross-sectional plane of the measuring tube (1),
wherein the radii intersecting each internal coil core (7) of a coil core group (17) form a central angle $\gamma$, for which $1° \leq \gamma \leq 80°$,
wherein one coil core (7) extends through at least two coils (8), wherein a longitudinal axis of the coil core runs parallel to the longitudinal axis (15) of the measuring tube (1),
wherein the two parts (I, II) of the measuring tube (1) each have exactly two coil core groups (17),
wherein a first coil core group (17.1) and a second coil core group (17.2) are arranged in the first part (I) of the measuring tube (1), wherein the first coil core group (17.1) is arranged in a first cross-sectional plane (A) and a second coil core group (17.2) is arranged in a second cross-sectional plane (B),
wherein the first and the second cross-sectional planes (A, B) are spaced apart in the longitudinal direction of the measuring tube (1), wherein the measuring electrode arrangement (13) is arranged in a third cross-sectional plane (C), wherein the third cross-sectional plane (C) is arranged between the first and the second cross-sectional planes (A, B) and preferably forms a plane of symmetry for the coil core groups (17), and preferably for the magnetic-field-generating device (4).

2. The flowmeter as claimed in claim 1,

wherein the coil core group (17) has exactly four coil cores (7) which are attached in the cross-sectional plane of the measuring tube (1),
wherein for the central angle $\gamma$, $2° \leq \gamma \leq 50°$ and preferably $10° \leq \gamma \leq 40°$.

3. The flowmeter as claimed in one of the preceding claims,
wherein a coil core (7) runs through exactly two coils (8).

4. The flowmeter as claimed in one of the preceding claims,
wherein all coils (8) which are connected in series have an electrical resistance between 2 and 300 $\Omega$, in particular between 100 and 280 $\Omega$, and preferably between 150 and 260 $\Omega$.

5. The flowmeter as claimed in one of the preceding claims,

wherein the magnetic-field-generating device (4) has two pole shoes (5),
wherein the pole shoes (5) are attached opposite each other, in particular in contact with an outer wall of the measuring tube (1),
wherein each pole shoe (5) is formed by at least two and preferably exactly two or exactly four pole shoe bodies (19),
wherein the pole shoe bodies (19) are formed by stacked sheet metal parts, in particular electrical steel.

6. The flowmeter as claimed in claim 5,
wherein two adjacent pole shoe bodies (19) are spaced a minimum distance C apart in the longitudinal direction of the measuring tube (1), said distance being less than 500 mm, in particular less than 50 mm, and preferably between 2 and 5 mm.

7. The flowmeter as claimed in one of the preceding claims,

wherein at least one field return arrangement (9) is attached to the outer wall of the measuring tube (1), in particular is adjacent,
wherein the field return arrangement (9) comprises at least two field returns (10),
wherein the coil cores (7) connect the pole shoes (5) to the field returns (10).

**Revendications**

1. Débitmètre électromagnétique, comprenant :

- un tube de mesure (1) destiné à guider un produit fluide dans une direction longitudinale ;
- un agencement d'électrodes de mesure (13) destiné à acquérir une tension de mesure dépendant de la vitesse d'écoulement et induite dans le produit,

l'agencement d'électrodes de mesure (13) présentant deux groupes d'électrodes de mesure (16), lesquels sont montés en face l'un de l'autre sur le tube de mesure (1), les groupes d'électrodes de mesure (16) comprenant chacun au moins deux électrodes de mesure (3),

deux rayons coupant chacun une électrode de mesure (3) d'un groupe d'électrodes de mesure (16), laquelle électrode est située à l'extérieur dans un plan de section transversale du tube de mesure (1), formant un angle au centre α selon la relation suivante : 20° ≤ α ≤ 40°,

toutes les électrodes de mesure (3) d'un groupe d'électrodes de mesure (13) étant reliées électriquement entre elles ; et

- un dispositif de génération de champ magnétique (4) destiné à générer un champ magnétique traversant le tube de mesure (1),

le dispositif de génération de champ magnétique (4) présentant au moins deux groupes de noyaux de bobine (17) avec respectivement au moins deux noyaux de bobine (7),

un plan de référence (18) - lequel est défini par un axe longitudinal (15) du tube de mesure (1) et un axe transversal du tube de mesure (1) coupant des électrodes de mesure (3) de l'agencement d'électrodes de mesure (16) - divisant le tube de mesure (1) en une première et une deuxième partie (I, II),

la première et la deuxième partie (I, II) du tube de mesure (1) présentant chacune au moins un groupe de noyaux de bobines (17),

deux rayons coupant les noyaux de bobines (7) d'un groupe de noyaux de bobines (17), lesquels noyaux sont situés à l'extérieur dans un plan de section transversale du tube de mesure (1), formant un angle au centre ß,

l'angle au centre ß obéissant à la relation suivante : 60° ≤ ß ≤ 80°,

**caractérisé en ce**

**qu'**un groupe de noyaux de bobines (17) présente au moins quatre noyaux de bobines (7), lesquels sont montés dans un plan de section transversale du tube de mesure (1),

les rayons coupant respectivement les noyaux de bobines (7), lesquels noyaux sont situés à l'intérieur d'un groupe de noyaux de bobines (17), couvrant un angle au centre γ selon la relation suivante : 1° ≤ γ ≤ 80°,

un noyau de bobine (7) s'étendant à travers au moins deux bobines (8),

un axe longitudinal du noyau de bobine s'étendant parallèlement à l'axe longitudinal (15) du tube de mesure (1),

les deux parties (I, II) du tube de mesure (1) présentant chacune exactement deux groupes de noyaux de bobine (17),

un premier groupe de noyaux de bobine (17.1) et un deuxième groupe de noyaux de bobine (17. 2) étant disposés dans la première partie (I) du tube de mesure (1),

le premier groupe de noyaux de bobines (17.1) étant disposé dans un premier plan de section (A) et un deuxième groupe de noyaux de bobines (17.2) étant disposé dans un deuxième plan de section transversale (B),

le premier et le deuxième plan de section transversale (A, B) étant espacés dans la direction longitudinale du tube de mesure (1), le dispositif d'électrodes de mesure (13) étant disposé dans un troisième plan de section transversale (C), le troisième plan de section transversale (C) étant disposé entre le premier et le deuxième plan de section transversale (A, B) et formant de préférence un plan de symétrie des groupes de noyaux de bobine (17) et de préférence du dispositif générateur de champ magnétique (4).

**2.** Débitmètre selon la revendication 1, pour lequel le groupe de noyaux de bobine (17) présente exactement quatre noyaux de bobine (7), lesquels sont montés dans le plan de section du tube de mesure (1), l'angle au centre γ obéissant à la relation suivante : 2° ≤ γ ≤ 50° et de préférence 10° ≤ γ ≤ 40°.

**3.** Débitmètre selon l'une des revendications précédentes, pour lequel un noyau de bobine (7) passe par exactement deux bobines (8).

**4.** Débitmètre selon l'une des revendications précédentes, pour lequel toutes les bobines (8) sont couplées en série et présentent une résistance électrique qui se situe entre 2 et 300 Ω, notamment entre 100 et 280 Ω et de préférence entre 150 et 260 Ω.

**5.** Débitmètre selon l'une des revendications précédentes,

pour lequel le dispositif générateur de champ magnétique (4) présente deux pièces polaires (5),

les pièces polaires (5) étant placées en face l'une de l'autre, notamment en appui sur une paroi extérieure du tube de mesure (1),

les pièces polaires (5) étant formées chacune par au moins deux et de préférence exactement deux ou exactement quatre corps de pièces polaires (19),

les corps de pièces polaires (19) étant formés de pièces de tôle empilées, notamment de tôles électriques.

6. Débitmètre selon la revendication 5,
   pour lequel deux pièces polaires (19) voisines présentent une distance minimale C dans la direction longitudinale du tube de mesure (1), laquelle distance est inférieure à 500 millimètres, notamment inférieure à 50 millimètres et de préférence comprise entre 2 et 5 millimètres.

7. Débitmètre selon l'une des revendications précédentes,

   pour lequel au moins un dispositif de retour de flux (9) est monté sur la paroi extérieure du tube de mesure (1), notamment de manière adjacente,
   le dispositif de retour de flux (9) comprenant au moins deux retours de flux (10),
   les noyaux de bobine (7) reliant les pièces polaires (5) aux retours de flux (10).

Fig. 1

EP 4 025 880 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014113409 A1
- DE 102014113408 A1
- CN 101294832 A
- WO 2004031699 A2
- DE 102015113390 A1
- EP 0878694 A1